(19) Europäisches Patentamt
European Patent Office
Office européen des brevets

(11) **EP 4 033 457 B1**

(12) **EUROPEAN PATENT SPECIFICATION**

(45) Date of publication and mention
of the grant of the patent:
**07.02.2024 Bulletin 2024/06**

(51) International Patent Classification (IPC):
**G06V 20/58** (2022.01)     **G06V 10/80** (2022.01)

(21) Application number: **21214891.0**

(52) Cooperative Patent Classification (CPC):
**G06V 20/586; G06V 10/806**

(22) Date of filing: **15.12.2021**

(54) **PARKING SPACE DETECTION METHOD AND APPARATUS**

PARKPLATZDETEKTIONSVERFAHREN UND -EINRICHTUNG

PROCÉDÉ ET APPAREIL DE DÉTECTION D'ESPACE DE STATIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2021 CN 202110076443**

(43) Date of publication of application:
**27.07.2022 Bulletin 2022/30**

(73) Proprietor: **Guangzhou Xiaopeng Autopilot Technology Co., Ltd.**
**Guangzhou, Guangdong 510000 (CN)**

(72) Inventors:
• **Feng, Kai**
**Guangzhou (CN)**
• **Chen, Shengjun**
**Guangzhou (CN)**
• **Qin, Han**
**Guangzhou (CN)**
• **Zhang, Hong**
**Guangzhou (CN)**
• **Jiang, Shaofeng**
**Guangzhou (CN)**

(74) Representative: **Habermann, Hruschka & Schnabel**
**Patentanwälte**
**Montgelasstraße 2**
**81679 München (DE)**

(56) References cited:
**CN-A- 109 435 942      CN-A- 109 532 821**
**CN-A- 110 969 655      CN-A- 111 881 874**
**CN-A- 112 193 241**

## Description

### FIELD

The present disclosure relates to the field of vehicle technologies, and more particularly, to a parking space detection method, a parking space detection apparatus, and a corresponding computer-readable storage medium.

### BACKGROUND

In a process of automatic parking of a vehicle, information of a parking space is collected through a sensor in the vehicle to detect whether the parking space is available.

At present, vehicles usually collect parking space information by using one sensor. Even if multiple sensors are provided in the vehicle, only parking space information collected by one of the multiple sensors is used. Collecting parking space information using only one sensor is prone to inability to collect the parking space information due to failure of the senor, reducing reliability of parking space detection, or has inaccurate parking space information collected due to an acquisition error of the sensor, reducing accuracy of the parking space detection. CN111881874A discloses a parking space recognition method, in which the accuracy of parking space recognition can be improved, and the problem of driving accidents during parking can be reduced. CN109532821A discloses a fusion parking system, which can improve parking performance and realize the accurate positioning function of the parking space. CN109435942A discloses a parking line parking space recognition method.

### SUMMARY

In view of the above problems, a parking space detection method and a parking space detection apparatus are proposed to solve or at least partially solve the above problems.

A parking space detection method includes: obtaining, during parking, parking space information sets collected by at least two sensors; performing parking space information matching between the parking space information sets collected by the at least two sensors to obtain at least two pieces of first parking space information for a same parking space frame; and generating second parking space information based on the at least two pieces of first parking space information. Said generating the second parking space information based on the at least two pieces of first parking space information includes: performing fusion on the at least two pieces of first parking space information to obtain the second parking space information. Each of the at least two pieces of first parking space information includes a perception correctness probability, and said performing fusion on the at least two pieces of first parking space information to obtain the second parking space information includes: determining whether the at least two pieces of first parking space information include at least two perception correctness probabilities greater than a predetermined probability; and when the at least two pieces of first parking space information include the at least two perception correctness probabilities greater than the predetermined probability, performing fusion on first parking space information corresponding to the at least two perception correctness probabilities greater than the predetermined probability to obtain the second parking space information. Each of the at least two pieces of first parking space information includes corner point information, and said performing fusion on the first parking space information corresponding to the at least two perception correctness probabilities greater than the predetermined probability to obtain the second parking space information includes: performing fusion on the corner point information in the first parking space information corresponding to the at least two perception correctness probabilities greater than the predetermined probability to obtain fused corner point information; and generating the second parking space information based on the fused corner point information.

Optionally, said performing parking space information matching between the parking space information sets collected by the at least two sensors to obtain the at least two pieces of first parking space information for the same parking space frame includes: determining parking space types of parking space information in the parking space information sets collected by the at least two sensors; determining projection overlap lengths and offset distances between parking space information of a same parking space type; and determining the at least two pieces of first parking space information for the same parking space frame based on the projection overlap lengths and the offset distances.

Optionally, determining the projection overlap lengths between the parking space information of the same parking space type includes: determining a first parking space frame and a second parking space frame based on the parking space information of the same parking space type; determining lengths of projection lines of the first parking space frame projected onto the second parking space frame and lengths of parking space frame lines of the second parking space frame; and determining the projection overlap lengths based on the lengths of the projection lines and the lengths of the parking space frame lines.

Optionally, determining the offset distances between the parking space information of the same parking space type includes: determine a first parking space frame and a second parking space frame based on the parking space information of the same parking space type; determining a first corner point from the first parking space frame and determining a second corner point corresponding to the first corner point from the second parking space frame; and determining a vertical distance from the first corner points to a parking space frame line where the second corner point is located as an offset distance.

A parking space detection apparatus includes: a parking space information set obtaining module configured to obtain, during parking, parking space information sets collected by at least two sensors; a matching module configured to performing parking space information matching between the parking space information sets collected by the at least two sensors to obtain at least two pieces of first parking space information for a same parking space frame; and a second parking space information generating module configured to generate second parking space information based on the at least two pieces of first parking space information. The second parking space information generating module includes: a fusion sub-module configured to perform fusion on the at least two pieces of first parking space information to obtain the second parking space information. Each of the at least two pieces of first parking space information includes a perception correctness probability, and the fusion sub-module includes: a perception correctness probability determining unit configured to determine whether the at least two pieces of first parking space information include at least two perception correctness probabilities greater than a predetermined probability; and a second parking space information obtaining unit configured to perform fusion on first parking space information corresponding to the at least two perception correctness probabilities greater than the predetermined probability to obtain the second parking space information, when the at least two pieces of first parking space information comprise the at least two perception correctness probabilities greater than the predetermined probability. Each of the at least two pieces of first parking space information further comprises corner point information, and the second parking space information obtaining unit includes: a fused corner point information obtaining sub-unit configured to obtain fused corner point information by performing fusion on the corner point information in the first parking space information corresponding to the at least two perception correctness probabilities greater than the predetermined probability; and a second parking space information generating sub-unit configured to generate the second parking space information based on the fused corner point information.

A vehicle includes a processor, a memory, and a computer program stored on the memory and executable on the processor. The computer program, when executed by the processor, implements the parking space detection method as described above.

A computer-readable storage medium having a computer program stored thereon is provided, and the computer program, when executed by a processor, implements the parking space detection method as described above.

The embodiments of the present disclosure have the following advantages.

In the embodiments of the present disclosure, during parking, parking space information sets collected by at least two sensors are obtained, parking space information matching is performed between the parking space information sets collected by the at least two sensors to obtain at least two pieces of first parking space information for the same parking space frame, and second parking space information is generated based on the at least two pieces of first parking space information. The embodiments of the present disclosure realize the generation of parking space information based on at least two sensors, and avoid the problem of inability of acquiring parking space information when a vision sensor failure occurs due to the use of only one vision sensor to acquire parking space information. In this way, the reliability of parking space detection is improved, and since the parking space information is collected through at least two sensors, the accuracy of the collected parking space information is improved.

**BRIEF DESCRIPTION OF DRAWINGS**

In order to clearly illustrate technical solutions of the present disclosure, a brief description of accompanying drawings used in embodiments is given below. Obviously, the accompanying drawings in the following description are only part embodiments of the present disclosure, and for those skilled in the art, other drawings can be obtained based on these drawings without paying creative labor.

FIG. 1 is a flowchart illustrating steps of a parking space detection method according to the present disclosure;
FIG. 2a is a flowchart illustrating steps of another parking space detection method according to the present disclosure;
FIG. 2b is a schematic diagram showing a multi-source parking space according to an embodiment of the present disclosure;
FIG. 3a is a flowchart illustrating steps of yet another parking space detection method according to an embodiment of the present disclosure;
FIG. 3b is a schematic diagram showing parking space types according to an embodiment of the present disclosure; and
FIG. 4 is a schematic structural diagram showing a parking space detection apparatus according to an embodiment of the present disclosure.

**DESCRIPTION OF EMBODIMENTS**

In order to make the above objectives, features and advantages of the present disclosure clearer and more understandable, the present disclosure will be further described in detail below with reference to the accompanying drawings and specific embodiments. Obviously, the embodiments described here are only part of the embodiments of the present disclosure, rather than all embodiments of the present disclosure. Based on the embodiments of the present disclosure, other embodiments obtained by those skilled in the art without creative work are within the protection scope of the present disclosure.

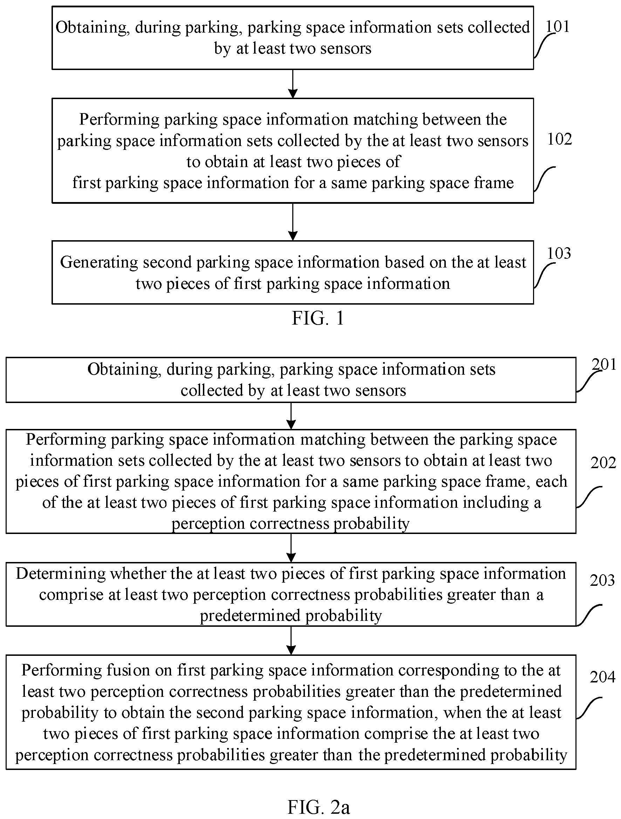

FIG. 1 shows a flowchart illustrating steps of a parking space detection method according to the present disclosure. Referring to FIG. 1, the method may specifically include the following steps.

At step 101, parking space information sets collected by at least two sensors are obtained during a process of parking.

The sensors are used to collect information of a parking space frame of a parking space, information of a shape of the parking space, and other information. The sensors may include vision sensors, radar sensors, sound wave sensors, infrared sensors, etc. The parking space information set may be collection of parking space information, the parking space information may include parking space shape information, parking space frame information, parking space position information, parking space availability information, and parking space serial number information, and the parking space shape information may include rectangular shape information and parallelogram shape information.

During parking, a sensor in the vehicle can collect information of parking spaces in a region where the vehicle is currently located, and generate a parking space information set based on the collected information of the parking spaces. In this way, the parking space information set collected by each sensor can be obtained respectively.

At step 102, parking space information matching is performed between the parking space information sets collected by the at least two sensors to obtain at least two pieces of first parking space information for a same parking space frame.

The parking space frame may be a frame line of the parking space, and each piece of first parking space information includes a perception correctness probability and corner point information. The corner point information is information of corner points in the parking space, such as position information of the corner points. The perception correctness probability may be a degree to which the first parking space information reflects an actual parking space, and the perception correctness probability may be obtained through evaluation by a model corresponding to the sensor.

After the parking space information set collected by each sensor is obtained, the parking space information matching is performed between the parking space information sets collected by the at least two sensors to obtain at least two pieces of first parking space information for the same parking space frame.

For example, the parking space information set collected by a sensor A may include a parking space frame 1, a parking space frame 2, and a parking space frame 3, and the parking space information set collected by a sensor B may include the parking space frame 1, the parking space frame 2, the parking space frame 3, and a parking space frame 4. Parking space frame information of the parking space information set collected by the sensor A can be matched with parking space frame information of the parking space information set collected by the sensor B to obtain parking space information collected by the sensor A for the parking space frame 1 and parking space information collected by the sensor B for the parking space frame 1, i.e., the first parking space information for the parking space frame 1.

At step 103, second parking space information is generated based on the at least two first pieces of first parking space information.

After the at least two pieces of first parking space information are obtained, the second parking space information is generated based on the at least two pieces of first parking space information.

In the invention, the at least two pieces of first parking space information are fused to obtain the second parking space information.

In the invention, at least two pieces of parking space frame information are determined from the at least two pieces of first parking space information, and a parking space frame fusion is performed on the parking space based on the at least two pieces of parking space frame information to obtain the fused parking space information, i.e., the second parking space information.

In the present disclosure, during parking, parking space information sets collected by at least two sensors are obtained, parking space information matching is performed between the parking space information sets collected by the at least two sensors to obtain at least two pieces of first parking space information for the same parking space frame, and second parking space information is generated based on the at least two pieces of first parking space information. The present disclosure realizes the generation of parking space information based on at least two sensors, and avoids the problem of inability of collecting parking space information when a vision sensor failure occurs due to the use of only one vision sensor to collect parking space information. In this way, the reliability of parking space detection is improved, and since the parking space information is collected through at least two sensors, the accuracy of the collected parking space information is improved.

FIG. 2a illustrates a flowchart illustrating another parking space detection method according to the present disclosure. Referring to FIG. 2a, the method may specifically include the following steps.

At step 201, parking space information sets collected by at least two sensors are obtained during parking.

At step 202, parking space information matching is performed between the parking space information sets collected by the at least two sensors to obtain at least two pieces of first parking space information for a same parking space frame, each of the at least two pieces of first parking space information including a perception correctness probability.

At step 203, whether the at least two pieces of first parking space information include at least two perception correctness probabilities greater than a predetermined probability is determined.

The predetermined probability may be a probability that is set artificially.

After the at least two pieces of first parking space information are obtained, the perception correctness probability in each piece of first parking space information may be compared with the predetermined probability to determine whether the at least two pieces of first parking space information include at least two perception correctness probabilities greater than the predetermined probability.

For example, parking space information sets collected by three sensors can be obtained, then first parking space information of each of the three sensors for the same parking space frame can be obtained, i.e., first parking space information a1 collected by a sensor A, first parking space information a2 collected by a sensor B, and first parking space information a3 collected by a sensor C, and a perception correctness probability in each piece of first parking space information is determined. For example, the perception correctness probability in the first parking space information a1 is 90%, the perception correctness probability in the first parking space information a2 is 80%, and the perception correctness probability in the first parking space information a3 is 95%. The perception correctness probability in each piece of first parking space information can be compared with a predetermined probability to determine whether the three pieces of first parking space information include at least two perception correctness probabilities greater than the predetermined probability.

At step 204, when the at least two pieces of first parking space information include the at least two perception correctness probabilities greater than a predetermined probability, fusion is performed on first parking space information corresponding to the at least two perception correctness probabilities greater than the predetermined probability to obtain second parking space information.

When it is determined that the at least two pieces of first parking space information include at least two perception correctness probabilities greater than the predetermined probability, it can be considered that at least two pieces of first parking space information that reflect the actual parking space to a higher degree, i.e., the first parking space information with a higher accuracy, are present, and then fusion is performed on first parking space information corresponding to the at least two perception correctness probabilities greater than the predetermined probability to obtain the second parking space information that is more accurate.

In an embodiment of the present disclosure, when it is determined that the at least two pieces of first parking space information do not include at least two perception correctness probabilities greater than the predetermined probability, it can be considered that two pieces of first parking space information that reflect the actual parking space to a higher degree are not present, and then the at least two pieces of first parking space information are compared with each other against the perception correctness probability to determine a piece of first parking space information with a greatest perception correctness probability, and the piece of first parking space information with the greatest perception correctness probability is determined as the second parking space information.

In the present disclosure, step 204 includes the following sub-steps.

At sub-step 11, fusion is performed on corner information in the first parking space information corresponding to the at least two perception correctness probabilities greater than the predetermined probability to obtain fused corner point information.

The fused corner point information is corner point information obtained by performing fusion on the corner point information in the at least two pieces of first parking space information, and the fused corner point information may include position information of the corner points.

When it is determined that at least two perception correctness probabilities in the at least two pieces of first parking space information are greater than the predetermined probability, fusion is performed on the corner point information in the first parking space information corresponding to the at least two perception correctness probabilities greater than the predetermined probability to obtain the fused corner point information.

In practical applications, when the vehicle starts, a coordinate system can be established from a starting point of the vehicle, and coordinate information corresponding to the corner point information in the first parking space information can be determined. Then, based on the coordinate information, coordinate fusion is performed on the corner point information in the first parking space information corresponding to the at least two perception correctness probabilities greater than the predetermined probability.

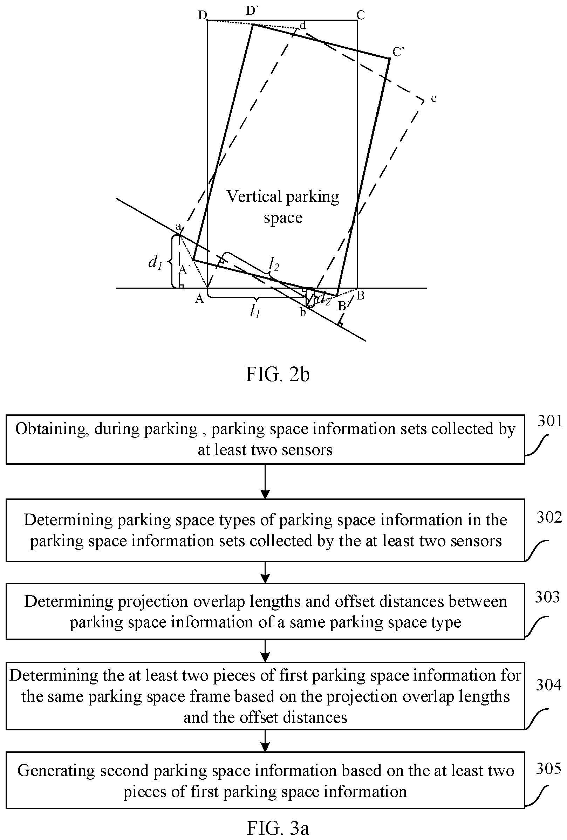

As shown in FIG. 2b, a solid-line rectangular frame ABCD may be first parking space information collected by a sensor A for a parking space frame O, and points A, B, C, and D in the solid-line rectangular frame ABCD may represent corner point information of the parking space frame O. A dotted rectangular frame abed may be first parking space information collected by a sensor B for the parking space frame O, and points a, b, c, and d in the dotted rectangular frame abed may represent corner point information of the parking space frame O. A solid-line rectangular frame A'B'C'D' may represent second parking space information obtained by performing fusion on corner point information in the first parking space information corresponding to the at least two perception correctness probabilities greater than the predetermined probability, and points A', B', C', and D' in the solid-line rectangular frame A'B'C'D' may represent the fused corner point information after fusion.

Specifically, the fusion may be performed in accordance with the following formula:

$$\begin{cases} X = \dfrac{ep_1 \bullet x + ep_2 \bullet x'}{ep_1 + ep_2} \\ Y = \dfrac{ep_1 \bullet y + ep_2 \bullet y'}{ep_1 + ep_2} \end{cases}$$

In the formula, X and Y may represent coordinate information corresponding to the fused corner point information, x and y may represent coordinate information corresponding to the corner point information in the first parking space information of the sensor A, x' and y' may represent coordinate information corresponding to the corner point information in the first parking space information of the sensor B, ep1 may represent a perception correctness probability in the first parking space information collected by the sensor A, and ep2 may represent a perception correctness probability in the first parking space information collected by the sensor B.

At sub-step 12, the second parking space information is generated based on the fused corner point information.

After the fused corner point information is obtained, the second parking space information is generated based on the fused corner point information.

In the the present disclosure, during the process of parking, parking space information sets collected by at least two sensors are obtained, parking space information matching is performed between the parking space information sets collected by the at least two sensors to obtain at least two pieces of first parking space information for the same parking space frame, each piece of first parking space information includes a perception correctness probability, whether the at least two pieces of first parking space information include at least two perception correctness probabilities greater than a predetermined probability is determined, and when the at least two pieces of first parking space information include at least two perception correctness probabilities greater than the predetermined probability, fusion is performed on the first parking space information corresponding to the at least two perception correctness probabilities to obtain second parking space information. The present disclosure realize the generation of parking space information based on at least two sensors, and avoid the problem of inability of collecting parking space information when a vision sensor failure occurs due to the use of only one vision sensor to collect parking space information. In this way, the reliability of parking space detection is improved, and since fusion is performed on the parking space information with a greater perception correctness probability in at least two sensors, the accuracy of the collected parking space information is improved.

FIG. 3a illustrates a flowchart illustrating yet another parking space detection method according to an embodiment of the present disclosure, which may specifically include the following steps.

At step 301, parking space information sets collected by at least two sensors are obtained during parking.

At step 302, parking space types of parking space information in the parking space information sets collected by the at least two sensors are determined.

The parking space types may include a vertical parking space type, a parallel parking space type, and an oblique parking space type.

After the parking space information sets collected by the at least two sensors are obtained, parking space shape information can be determined from parking space information in the parking space information sets, and the parking space types of the parking space information can be determined based on the parking space shape information.

In practical applications, ratio information for the parking space frame, e.g., information of ratios between frame lines of the parking space frame can be determined based on parking space frame information in the parking space information. Information of a direction of a road where the vehicle is current located can be determined, information of angles of the respective frame lines of the parking space frame relative to the road can be determined based on parking space position information in the parking space information and the information of the direction of the road. The parking space shape information can be determined based on the ratio information of the parking space frame and the information of the angles of the respective frame lines of the parking space frame relative to the road.

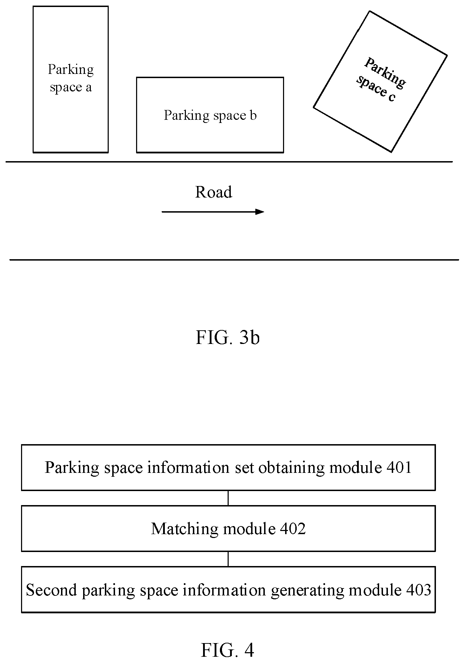

As shown in FIG. 3b, parking space shape information in parking space information a from a sensor A may indicate that the parking space is perpendicular to the road, and ratio information of the parking space frame is 16:9 which is rectangular shape information; parking space shape information in parking space information b from the sensor A may indicate that the parking space is parallel to the road, and ratio information of the parking space frame is 9:16 which is rectangular shape information; and parking space shape information in parking space information c for the sensor A may indicate that the parking space is 30 degrees relative to the road, and ratio information of the parking space frame is 3:4 which is rectangular shape information. Similarly, parking space types of parking space information collected by other sensors can be obtained.

At step 303, projection overlap lengths and offset distances between parking space information of a same parking space type are determined.

The projection overlap lengths can be projection overlap lengths obtained when parking space information collected by one sensor is projected onto parking space information of the same parking space type collected by another sensor. The offset distances may be offset distances between parking space information collected by one sensor and parking space information of the same parking space type collected by another sensor.

After the parking space types of the parking space information are determined, parking space information of the same parking space type in the parking space information sets collected by the at least two sensors can be determined, and the projection overlap length and the offset distance between the parking space information of the same parking space type can also be determined.

In an embodiment of the present disclosure, the step of determining the projection overlap lengths between the parking space information of the same parking space type may include the following sub-steps.

At sub-step 21, a first parking space frame and a second parking space frame are determined based on the parking space information of the same parking space type.

The first parking space frame and the second parking space frame may be parking space frames corresponding to different sensors.

After the parking space types of the parking space information are determined, the parking space information of the same parking space type in the parking space information sets collected by the at least two sensors can be determined, and the first parking space frame and the second parking space frame can be determined based on parking space frame information in the parking space information of the same parking space type.

At sub-step 22, lengths of projection lines of the first parking space frame projected onto the second parking space frame and lengths of parking space frame lines of the second parking space frame are determined.

The lengths of the parking space frame lines may include a length of each frame line of the parking space frame.

After the first parking space frame and the second parking space frame are determined, the lengths of the projection lines of the first parking space frame projected onto the second parking space frame and the lengths of the parking space frame lines of the second parking space frame can be determined.

As shown in FIG. 2b, the solid-line rectangular frame ABCD may be the first parking space frame, the dotted rectangular frame abcd may be the second parking space frame, and $l_1$ may be a projection length of a frame line ab of the dotted rectangular frame abcd projected onto a frame line AB of the solid-line rectangular frame ABCD, and $l_2$ may be a projection length of the frame line AB in the solid-line rectangular frame ABCD projected onto the frame line ab of the dotted rectangular frame abcd.

At sub-step 23, projection overlap lengths are determined based on the lengths of the projection lines and the lengths of the parking space frame lines.

After the lengths of the projection lines and the lengths of the parking space frame lines, the projection overlap lengths can be determined based on the lengths of the projection lines and the lengths of the parking space frame lines.

In an embodiment of the present disclosure, the step of determining the offset distance between the parking space information of the same parking space type may include the following sub-steps.

At sub-step 31, a first parking space frame and a second parking space frame are determined based on the parking space information of the same parking space type.

At sub-step 32, a first corner point is determined from the first parking space frame, and a second corner point corresponding to the first corner points is determined from the second parking space frame.

After the first parking space frame and the second parking space frame are determined, the first corner point in the first parking space frame and the second corner point corresponding to the first corner point in the second parking space frame can be determined.

At sub-step 33, a vertical distance from the first corner point to a parking space frame line where the second corner point is located is determined as an offset distance.

After the first corner points and the second corner points are determined, the vertical distance from the first corner point to the parking space frame line where the second corner point is located can be determined as the offset distance.

As shown in FIG. 2b, the solid-line rectangular frame ABCD may be the first parking space frame, the dotted rectangular frame abcd may be the second parking space frame, $d_1$ may be a distance from the corner point a of the dotted rectangular frame abcd to a projection of the corner point a on a parking space frame line where the corner point A is located in the solid-line rectangular frame ABCD, i.e., a vertical distance from the corner point a to a frame line AB, and $d_2$ may be a distance from the corner point b of the dotted rectangular frame abcd to a projection of the corner point b on the frame line AB of the solid-line rectangular frame ABCD, i.e., a vertical distance from the corner point b to the frame line AB.

At step 304, at least two pieces of first parking space information for a same parking space frame are determined based on the projection overlap lengths and the offset distances.

After the projection overlap lengths and the offset distances are obtained, whether the projection overlap lengths and the offset distances satisfy a preset condition is determined, and at least two pieces of first parking space information satisfying the preset condition are determined as the first parking space information for the same parking space frame.

Specifically, the preset condition may be the following formula:

$$(l_1/NRNF > TH1 \,||\, l_2/NR'NF' > TH1) \,\&\&\, d_1 < TH2 \,\&\&\, d_2 < TH2,$$

where **NRNF** and **NR'NF'** may represent lengths of parking space frame lines corresponding to different sensors, **TH1** may represent a predetermined projection overlap length threshold, and **TH2** may represent a predetermined offset distance threshold.

At step 305, second parking space information is generated based on the at least two pieces of first parking space information.

In the embodiment of the present disclosure, during the process of parking, parking space information sets collected by at least two sensors are obtained, parking space types of parking space information in the parking space information sets collected by the at least two sensors is determined, projection overlap lengths and offset distances between the parking space information of the same parking space type are determined, and at least two pieces of first parking space information for the same parking space frame are determined based on the projection overlap lengths and the offset distances, and second parking space information is generated based on the at least two pieces of first parking space information. The embodiment of the present disclosure realizes the generation of parking space information based on at least two sensors, and avoids the problem of inability of collecting parking space information when a vision sensor failure occurs due to the use of only one vision sensor to collect parking space information. In this way, the reliability of parking space detection is improved, and since fusion is performed on the parking space information for the same parking space frame in at least two sensors, the accuracy of the collected parking space information is improved.

It should be noted that the method embodiments are all expressed as a combination of a series of actions for the sake of simple description. However, those skilled in the art should know that the embodiments of the present disclosure are not limited by the described sequence of actions, because certain steps according to the embodiments of the present disclosure may be performed in other order or simultaneously.

FIG. 4 illustrates a schematic structural diagram showing a parking space detection apparatus according to an embodiment of the present disclosure, which may specifically include: a parking space information set obtaining module 401, a matching module 402, and a second parking space information generating module 403.

The parking space information set acquisition module 401 is configured to obtain, during parking, parking space information sets collected by at least two sensors.

The matching module 402 is configured to perform parking space information matching between the parking space information sets collected by the at least two sensors to obtain at least two pieces of first parking space information for a same parking space frame;

The second parking space information generating module 403 is configured to generate second parking space information based on the at least two pieces of first parking space information.

In an the present disclosure, the second parking space information generating module 403 includes a fusion sub-module configured to perform fusion on the at least two pieces of first parking space information to obtain the second parking space information.

In the present disclosure, each of the two pieces of first parking space information includes a perception correctness probability, and the fusion sub-module includes: a perception correctness probability determining unit configured to determine whether the at least two pieces of first parking space information include at least two perception correctness probabilities greater than a predetermined probability; and a second parking space information obtaining unit configured to obtain, when the at least two pieces of first parking space information include the at least two perception correctness probabilities greater than the predetermined probability, the second parking space information by performing fusion on first parking space information corresponding to the at least two perception correctness probabilities greater than the predetermined probability.

In the present disclosure, each of the at least two pieces of first parking space information includes corner point information, and the second parking space information obtaining unit includes: a fused corner point information obtaining sub-unit configured to obtain fused corner point information by performing fusion on the corner point information in the first parking space information corresponding to the at least two perception correctness probabilities greater than the predetermined probability; and a second parking space information generating sub-unit configured to generate the second parking space information based on the fused corner point information.

In an embodiment of the present disclosure, the matching module 402 includes: a parking space type determining sub-module configured to determine parking space types of parking space information in the parking space information sets collected by the at least two sensors; a projection overlap length and offset distance determining sub-module configured to determine projection overlap lengths and offset distances between parking space information of the same parking space type; and a first parking space information determining sub-module configured to determine the at least two pieces of first parking space information for the same parking space frame based on the projection overlap lengths and the offset distances.

In an embodiment of the present disclosure, the projection overlap length and offset distance determining sub-module includes: a parking space frame determining unit configured to determine a first parking space frame and a second parking space frame based on the parking space information of the same parking space type; a projection line length and parking space frame line length determining unit configured to determine lengths of projection lines of the first parking space frame projected onto the second parking space frame and lengths of parking space frame lines of the second parking space frame; and a projection overlap length determining unit configured to determine the projection overlap lengths based on the lengths of the projection lines and the lengths of the parking space frame lines.

In an embodiment of the present disclosure, the projection overlap length and offset distance determining sub-module includes: a corner point determining unit configured to determine a first corner point from the first parking space frame and a second corner point corresponding to the first corner point from the second parking space frame; and an offset distance determining unit configured to determine a vertical distance from the first corner point to a parking space frame line where the second corner point is located as an offset distance.

In the embodiment of the present disclosure, during parking, parking space information sets collected by at least two sensors are obtained, parking space information matching is performed between the parking space information sets collected by the at least two sensors to obtain at least two pieces of first parking space information for the same parking space frame, and second parking space information is generated based on the at least two pieces of first parking space information. The embodiment of the present disclosure realizes the generation of parking space information based on at least two sensors, and avoids the problem of inability of collecting parking space information when a vision sensor failure occurs due to the use of only one vision sensor to collect parking space information. In this way, the reliability of parking space detection is improved, and since the parking space information is collected by the at least two sensors, the accuracy of the collected parking space information is improved.

An embodiment of the present disclosure provides a vehicle, which may include a processor, a memory, and a computer program stored on the memory and executable on the processor. The computer program, when executed by the processor, implements the parking space detection method as described above.

The present disclosure provides a computer-readable storage medium having a computer program stored thereon. The computer program, when executed by a processor, implements the parking space detection method as described above.

Since the apparatus embodiments are basically similar to the method embodiments, the description of the apparatus embodiments is relatively simple. For related description, reference may be made to a corresponding part of the description of the method embodiments.

Each embodiment in the specification is described in a progressive manner. Each embodiment focuses on the differences from other embodiments. The same or similar parts of various embodiments can be referred to each other.

Those skilled in the art should understand that the embodiments of the present disclosure may be provided as a method, an apparatus, or a computer program product. Therefore, the embodiments of the present disclosure may adopt the form of a complete hardware embodiment, a complete software embodiment, or an embodiment combining software and hardware. Moreover, the embodiments of the present disclosure may adopt the form of computer program products implemented on one or more computer-usable storage media (including but not limited to disk storage, CD-ROM, optical storage, etc.) containing computer-usable program codes.

The embodiments of the present disclosure are described with reference to the flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal devices to generate a machine, such that instructions executed by the processors of the computers or other programmable data processing terminal devices generate an apparatus for implementing functions specified in one or more processes in the flowchart and/or one or more blocks in the block diagram.

These computer program instructions can alternatively be stored in a computer-readable memory that can guide a computer or other programmable data processing terminal devices to work in a specific manner, such that the instructions stored in the computer-readable memory produce an article of manufacture including an instruction device. The instruction device implements functions specified in one or more processes in the flowchart and/or one or more blocks in the block diagram.

These computer program instructions can alternatively be loaded on a computer or other programmable data processing terminal devices to enable a series of operation steps to be executed on the computer or other programmable terminal devices to produce computer-implemented processing, such that instructions executed on the computer or other programmable terminal devices provide steps for implementing functions specified in one or more processes in the flowchart and/or one or more blocks in the block diagram.

Therefore, the attached claims are intended to be interpreted as including the preferred embodiments and all changes and modifications falling within the scope of the the attached claims.

Finally, it should be noted that in this disclosure, relational terms such as "first" and "second" are only used to distinguish one entity or operation from another entity or operation, and do not necessarily require or imply the presence of any such actual relationship or sequence between these entities or operations. Moreover, the terms "include", "comprise" or any other variants thereof are intended to cover non-exclusive inclusion, such that a process, method, article, or terminal device that includes a series of elements not only includes those elements, but also includes other elements that are not explicitly listed, or also includes elements inherent to the process, method, article, or terminal device. Without more restrictions, an element defined by the statement "comprises a..." does not exclude the existence of other identical elements in the process, method, article, or terminal device that includes the element.

The above provides a detailed description to the parking space detection method and the parking space detection apparatus. Specific examples are used herein to illustrate the principle and implementation of the present disclosure.

**Claims**

1. A parking space detection method, comprising:

   obtaining (101), during parking, parking space information sets collected by at least two sensors;
   performing (102) parking space information matching between the parking space information sets collected by the at least two sensors to obtain at least two pieces of first parking space information for a same parking space frame; and
   generating (103) second parking space information based on the at least two pieces of first parking space information,
   wherein said generating (103) the second parking space information based on the at least two pieces of first parking space information comprises:

      performing fusion on the at least two pieces of first parking space information to obtain the second parking space information,
      wherein each of the at least two pieces of first parking space information comprises a perception correctness probability,

   wherein said performing fusion on the at least two pieces of first parking space information to obtain the second parking space information comprises:

      determining (203) whether the at least two pieces of first parking space information comprise at least two perception correctness probabilities greater than a predetermined probability; and
      when the at least two pieces of first parking space information comprise the at least two perception correctness probabilities greater than the predetermined probability, performing fusion (204) on first parking space information corresponding to the at least two perception correctness probabilities greater than the predetermined probability to obtain the second parking space information,

   **characterized in that** each of the at least two pieces of first parking space information further comprises corner point information, and said performing fusion on the first parking space information corresponding to the at least two perception correctness probabilities greater than the predetermined probability to obtain the second parking space information comprises:

      performing fusion on the corner point information in the first parking space information corresponding to the at least two perception correctness probabilities greater than the predetermined probability to obtain fused corner point information; and
generating the second parking space information based on the fused corner point information.

2. The parking space detection method according to claim 1, wherein said performing (102) parking space information matching between the parking space information sets collected by the at least two sensors to obtain the at least two pieces of first parking space information for the same parking space frame comprises:

determining (302) parking space types of parking space information in the parking space information sets collected by the at least two sensors;
determining (303) projection overlap lengths and offset distances between parking space information of a same parking space type; and
determining (304) the at least two pieces of first parking space information for the same parking space frame based on the projection overlap lengths and the offset distances.

3. The parking space detection method according to claim 2, wherein said determining (303) the projection overlap length between the parking space information of the same parking space type comprises:

determining a first parking space frame and a second parking space frame based on the parking space information of the same parking space type;
determining lengths of projection lines of the first parking space frame projected onto the second parking space frame and lengths of parking space frame lines of the second parking space frame; and
determining the projection overlap lengths based on the lengths of the projection lines and the lengths of the parking space frame lines.

4. The parking space detection method according to claim 2, wherein said determining (303) the offset distances between the parking space information of the same parking space type comprises:

determining a first parking space frame and a second parking space frame based on the parking space information of the same parking space type;
determining a first corner point from the first parking space frame and determining a second corner point corresponding to the first corner point from the second parking space frame; and
determining a vertical distance from the first corner point to a parking space frame line where the second corner point is located as an offset distance.

5. A parking space detection apparatus, comprising:

a parking space information set obtaining module (401) configured to obtain, during parking, parking space information sets collected by at least two sensors;
a matching module (402) configured to performing parking space information matching between the parking space information sets collected by the at least two sensors to obtain at least two pieces of first parking space information for a same parking space frame; and
a second parking space information generating module (403) configured to generate second parking space information based on the at least two pieces of first parking space information, wherein the second parking space information generating module (403) comprises:

a fusion sub-module configured to perform fusion on the at least two pieces of first parking space information to obtain the second parking space information,
wherein each of the at least two pieces of first parking space information comprises a perception correctness probability,
wherein the fusion sub-module comprises:

a perception correctness probability determining unit configured to determine whether the at least two pieces of first parking space information comprise at least two perception correctness probabilities greater than a predetermined probability; and
a second parking space information obtaining unit configured to perform fusion on first parking space information corresponding to the at least two perception correctness probabilities greater than the predetermined probability to obtain the second parking space information, when the at least two pieces of first parking space information comprise the at least two perception correctness probabilities greater than the predetermined probability, **characterized in that** each of the at least two pieces of first parking space information further comprises corner point information, and the second parking space information obtaining unit comprises:

a fused corner point information obtaining sub-unit configured to obtain fused corner point information by performing fusion on the corner point information in the first parking space information corresponding to the at least two perception correctness probabilities greater than the predetermined probability; and
a second parking space information generating sub-unit configured to generate the second parking space information based on the fused corner point information.

6. The parking space detection apparatus according to 5, wherein the matching module (402) comprises:

a parking space type determining sub-module configured to determine parking space types of parking space information in the parking space information sets collected by the at least two sensors;
a projection overlap length and offset distance determining sub-module configured to determine projection overlap lengths and offset distances between parking space information of a same parking space type; and
a first parking space information determining sub-module configured to determine the at least two pieces of first parking space information for the same parking space frame based on the projection overlap lengths and the offset distances.

7. The parking space detection apparatus according to claim 6, wherein the projection overlap length and offset distance determining sub-module comprises:

a parking space frame determining unit configured to determine a first parking space frame and a second parking space frame based on the parking space information of the same parking space type;
a projection line length and parking space frame line length determining unit configured to determine lengths of projection lines of the first parking space frame projected onto the second parking space frame and lengths of parking space frame lines of the second parking space frame; and
a projection overlap length determining unit configured to determine the projection overlap lengths based on the lengths of the projection lines and the lengths of the parking space frame lines.

8. A vehicle, comprising a processor, a memory, and a computer program stored on the memory and executable on the processor, **characterized in that** the computer program, when executed by the processor, implements the parking space detection method according to any one of claims 1 to 4.

9. A computer-readable storage medium, having a computer program stored thereon,
**characterized in that** the computer program, when executed by a processor, implements the parking space detection method according to any one of claims 1 to 4.

**Patentansprüche**

1. Parkplatzdetektionsverfahren, aufweisend:

Erhalten (101), während des Parkens, von Parkplatzinformationssätzen, die durch mindestens zwei Sensoren gesammelt werden;
Durchführen (102) eines Parkplatzinformationsabgleichs zwischen den von den mindestens zwei Sensoren gesammelten Parkplatzinformationssätzen, um mindestens zwei Teile von ersten Parkplatzinformationen für ein und denselben Parkplatzrahmen zu erhalten; und
Erzeugen (103) von zweiten Parkplatzinformationen auf der Grundlage der mindestens zwei Teile der ersten Parkplatzinformationen,
wobei das Erzeugen (103) der zweiten Parkplatzinformationen basierend auf den mindestens zwei Teilen der ersten Parkplatzinformationen aufweist:
Durchführen einer Fusion mit den mindestens zwei Teilen der ersten Parkplatzinformationen, um die zweiten Parkplatzinformationen zu erhalten,
wobei jede der mindestens zwei Teile der ersten Parkplatzinformationen eine Wahrnehmungsrichtigkeitswahrscheinlichkeit aufweist,

wobei die Durchführung der Fusion mit den mindestens zwei Teilen der ersten Parkplatzinformationen, um die zweiten Parkplatzinformationen zu erhalten, aufweist:

Bestimmen (203), ob die mindestens zwei Teile der ersten Parkplatzinformationen mindestens zwei Wahrnehmungsrichtigkeitswahrscheinlichkeiten aufweisen, die größer als eine vorbestimmte Wahrscheinlichkeit sind; und

wenn die mindestens zwei Teile der ersten Parkplatzinformationen die mindestens zwei Wahrnehmungsrichtigkeitswahrscheinlichkeiten aufweisen, die größer als die vorbestimmte Wahrscheinlichkeit sind, Durchführen einer Fusion (204) mit den ersten Parkplatzinformationen, die den mindestens zwei Wahrnehmungsrichtigkeitswahrscheinlichkeiten entsprechen, die größer als die vorbestimmte Wahrscheinlichkeit sind, um die zweiten Parkplatzinformationen zu erhalten,

**dadurch gekennzeichnet, dass** jede der mindestens zwei Teile der ersten Parkplatzinformationen ferner Eckpunktinformationen aufweist, und das Durchführen einer Fusion mit den ersten Parkplatzinformationen, die den mindestens zwei Wahrnehmungsrichtigkeitswahrscheinlichkeiten entsprechen, die größer als die vorbestimmte Wahrscheinlichkeit sind, um die zweiten Parkplatzinformationen zu erhalten, aufweist:
Durchführen einer Fusion der Eckpunktinformationen in den ersten Parkrauminformationen, die den mindestens zwei Wahrnehmungsrichtigkeitswahrscheinlichkeiten entsprechen, die größer als die vorbestimmte Wahrscheinlichkeit sind, um fusionierte Eckpunktinformationen zu erhalten; und
Erzeugen der zweiten Parkplatzinformationen auf der Grundlage der fusionierten Eckpunktinformation.

2. Parkplatzdetektionsverfahren nach Anspruch 1, bei dem das Durchführen (102) des Abgleichs von Parkplatzinformationen zwischen den von den mindestens zwei Sensoren gesammelten Parkplatzinformationssätzen, um die mindestens zwei Teile von ersten Parkplatzinformationen für denselben Parkplatzrahmen zu erhalten, aufweist:

Bestimmen (302) von Parkplatztypen von Parkplatzinformationen in den von den mindestens zwei Sensoren gesammelten Parkplatzinformationssätzen;
Bestimmung (303) von Projektionsüberlappungslängen und Versatzabständen zwischen Parkplatzinformationen desselben Parkplatztyps; und
Bestimmen (304) der mindestens zwei Teile von ersten Parkplatzinformationen für denselben Parkplatzrahmen auf der Grundlage der Projektionsüberlappungslängen und der Versatzabstände.

3. Parkplatzdetektionsverfahren nach Anspruch 2, bei dem das Bestimmen (303) der Projektionsüberlappungslänge zwischen den Parkplatzinformationen desselben Parkplatztyps aufweist:

Bestimmen eines ersten Parkplatzrahmens und eines zweiten Parkplatzrahmens auf der Grundlage der Parkplatzinformationen desselben Parkplatztyps;
Bestimmen der Längen von Projektionslinien des ersten Parkplatzrahmens, die auf den zweiten Parkplatzrahmen projiziert werden, und der Längen von Parkplatzrahmenlinien des zweiten Parkplatzrahmens; und
Bestimmung der Projektionsüberlappungslängen auf der Grundlage der Längen der Projektionslinien und der Längen der Parkplatzrahmenlinien.

4. Parkplatzdetektionsverfahren nach Anspruch 2, bei dem die Bestimmung (303) der Versatzabstände zwischen den Parkplatzinformationen desselben Parkplatztyps aufweist:

Bestimmen eines ersten Parkplatzrahmens und eines zweiten Parkplatzrahmens auf der Grundlage der Parkplatzinformationen desselben Parkplatztyps;
Bestimmen eines ersten Eckpunkts aus dem ersten Parkplatzrahmen und Bestimmen eines zweiten Eckpunkts, der dem ersten Eckpunkt entspricht, aus dem zweiten Parkplatzrahmen; und
Bestimmen eines vertikalen Abstands vom ersten Eckpunkt zu einer Parkplatzrahmenlinie, an der sich der zweite Eckpunkt befindet, als Versatzabstand.

5. Parkplatzdetektionseinrichtung, aufweisend:

ein Modul (401) zum Erhalten von Parkplatzinformationssätzen, das so konfiguriert ist, dass es während des Parkens Parkplatzinformationssätze erhält, die von mindestens zwei Sensoren erfasst werden;
ein Abgleichsmodul (402), das so konfiguriert ist, dass es einen Parkplatzinformationsabgleich zwischen den von den mindestens zwei Sensoren gesammelten Parkplatzinformationssätzen durchführt, um mindestens zwei Teile von ersten Parkplatzinformationen für ein und denselben Parkplatzrahmen zu erhalten; und

ein zweites Modul (403) zur Erzeugung von Parkplatzinformationen, das so konfiguriert ist, dass es zweite Parkplatzinformationen auf der Grundlage der mindestens zwei Teile von ersten Parkplatzinformationen erzeugt, wobei das zweite Modul (403) zur Erzeugung von Parkplatzinformationen aufweist:

ein Fusionsuntermodul, das so konfiguriert ist, dass es eine Fusion der mindestens zwei Teile der ersten Parkplatzinformationen durchführt, um die zweiten Parkplatzinformationen zu erhalten, wobei jede der mindestens zwei Teile von ersten Parkplatzinformationen eine Wahrnehmungsrichtigkeitswahrscheinlichkeit aufweist, wobei das Fusionsuntermodul aufweist:

eine Wahrnehmungsrichtigkeitswahrscheinlichkeits-Bestimmungseinheit, die konfiguriert ist, um zu bestimmen, ob die mindestens zwei Teile der ersten Parkplatzinformationen mindestens zwei Wahrnehmungsrichtigkeitswahrscheinlichkeiten aufweist, die größer als eine vorbestimmte Wahrscheinlichkeit sind; und eine Einheit zum Erhalten von zweiten Parkplatzinformationen, die so konfiguriert ist, dass sie eine Fusion mit ersten Parkrauminformationen durchführt, die den mindestens zwei Wahrnehmungsrichtigkeitswahrscheinlichkeiten entsprechen, die größer als die vorbestimmte Wahrscheinlichkeit sind, um die zweiten Parkplatzinformationen zu erhalten, wenn die mindestens zwei Teile der ersten Parkrauminformationen die mindestens zwei Wahrnehmungsrichtigkeitswahrscheinlichkeiten aufweisen, die größer als die vorbestimmte Wahrscheinlichkeit sind,

**dadurch gekennzeichnet, dass** jeder der mindestens zwei Teile von ersten Parkplatzinformationen ferner Eckpunktinformationen aufweist, und die Einheit zum Erhalten von zweiten Parkplatzinformationen aufweist:

eine Untereinheit zum Erhalten von fusionierten Eckpunktinformationen, die so konfiguriert ist, dass sie fusionierte Eckpunktinformationen erhält, indem sie eine Fusion der Eckpunktinformationen in den ersten Parkplatzinformationen durchführt, die den mindestens zwei Wahrnehmungsrichtigkeitswahrscheinlichkeiten entsprechen, die größer als die vorbestimmte Wahrscheinlichkeit sind; und eine zweite Untereinheit zum Erzeugen von Parkplatzinformationen, die so konfiguriert ist, dass sie die zweiten Parkplatzinformationen auf der Grundlage der fusionierten Eckpunktinformationen erzeugt.

6. Parkplatzdetektionseinrichtung nach Anspruch 5, bei der das Abgleichungsmodul (402) aufweist:

ein Untermodul zur Bestimmung des Parkplatztyps, das so konfiguriert ist, dass es Parkplatztypen von Parkplatzformationen in den von den mindestens zwei Sensoren gesammelten Parkplatzinformationssätzen bestimmt; ein Untermodul zur Bestimmung von Projektionsüberlappungslängen und Versatzabständen, das so konfiguriert ist, dass es Projektionsüberlappungslängen und Versatzabstände zwischen Parkplatzinformationen desselben Parkplatztyps bestimmt; und ein Untermodul zur Bestimmung der ersten Parkplatzinformationen, das so konfiguriert ist, dass es die mindestens zwei Teile der ersten Parkrauminformationen für denselben Parkplatzrahmen auf der Grundlage der Projektionsüberlappungslängen und der Versatzabstände bestimmt.

7. Parkplatzdetektionseinrichtung nach Anspruch 6, bei der das Untermodul zur Bestimmung der Projektionsüberlappungslänge und des Versatzabstands aufweist:

eine Parkplatzrahmen-Bestimmungseinheit, die so konfiguriert ist, dass sie einen ersten Parkplatzrahmen und einen zweiten Parkplatzrahmen auf der Grundlage der Parkplatzinformationen desselben Parkplatztyps bestimmt; eine Einheit zur Bestimmung der Länge von Projektionslinien und Parkplatzrahmenlinien, die so konfiguriert ist, dass sie die Längen von Projektionslinien des ersten Parkplatzrahmens, die auf den zweiten Parkplatzrahmen projiziert werden, und die Längen von Parkplatzrahmenlinien des zweiten Parkplatzrahmens bestimmt; und eine Projektionsüberlappungslängen-Bestimmungseinheit, die so konfiguriert ist, dass sie die Projektionsüberlappungslängen auf der Grundlage der Längen der Projektionslinien und der Längen der Parkplatzrahmenlinien bestimmt.

8. Fahrzeug mit einem Prozessor, einem Speicher und einem Computerprogramm, das in dem Speicher gespeichert ist und von dem Prozessor ausgeführt werden kann, **dadurch gekennzeichnet, dass** das Computerprogramm, wenn es von dem Prozessor ausgeführt wird, das Parkplatzdetektionsverfahren nach einem der Ansprüche 1 bis 4 implementiert.

**9.** Computerlesbares Speichermedium, auf dem ein Computerprogramm gespeichert ist,
**dadurch gekennzeichnet, dass** das Computerprogramm, wenn es von einem Prozessor ausgeführt wird, das Parkplatzdetektionsverfahren nach einem der Ansprüche 1 bis 4 implementiert.

**Revendications**

**1.** Procédé de détection de place de parking, comprenant:

obtenir (101), pendant le parking, d'ensembles d'informations de parking collectés par au moins deux capteurs;
effectuer (102) une concordance d'informations de parking entre les ensembles d'informations de parking collectés par les au moins deux capteurs afin d'obtenir au moins deux parties de premières informations de parking pour un même cadre de parking; et
générer (103) des deuxièmes informations de parking sur la base des au moins deux parties des premières informations de parking,
dans lequel la génération (103) des deuxièmes informations de parking comprend, sur la base des au moins deux parties des premières informations de parking:

effectuer une fusion avec les au moins deux parties des premières informations de parking afin d'obtenir les secondes informations de parking,
dans lequel chacune desdites au moins deux parties desdites premières informations de parking a une probabilité d'exactitude de perception,
dans lequel l'exécution de la fusion avec les au moins deux parties des premières informations de parking pour obtenir les secondes informations de parking comprend:

déterminer (203) si les au moins deux parties des premières informations de parking ont au moins deux probabilités d'exactitude de perception qui sont supérieures à une probabilité prédéterminée; et si les au moins deux parties des premières informations de parking présentent les au moins deux probabilités d'exactitude de perception qui sont supérieures à la probabilité prédéterminée, effectuer une fusion (204) avec les premières informations de parking correspondant aux au moins deux probabilités d'exactitude de perception qui sont supérieures à la probabilité prédéterminée, pour obtenir les secondes informations de parking,

**caractérisé en ce que** chacune desdites au moins deux parties desdites premières informations de parking comprend en outre des informations de point d'angles, et comprend l'exécution d'une fusion avec lesdites premières informations de parking correspondant auxdites au moins deux probabilités d'exactitude de perception qui sont supérieures à ladite probabilité prédéterminée pour obtenir lesdites secondes informations de parking:

effectuer une fusion des informations de point d'angle dans les premières informations de place de parking correspondant aux au moins deux probabilités d'exactitude de perception qui sont supérieures à la probabilité prédéterminée afin d'obtenir des informations de point d'angle fusionnées; et
générer la deuxième information de parking sur la base de l'information de point d'angle fusionnée.

**2.** Procédé de détection de place de parking selon la revendication 1, dans lequel l'exécution (102) de la comparaison d'informations de place de parking entre les ensembles d'informations de place de parking collectés par les au moins deux capteurs afin d'obtenir les au moins deux parties de premières informations de place de parking pour le même cadre de place de parking:

déterminer (302) des types de places de parking à partir d'informations de parking dans les ensembles d'informations de parking collectés par les au moins deux capteurs;
déterminer (303) des longueurs de chevauchement des projections et des distances de décalage entre les informations sur les places de parking du même type de place de parking; et
déterminer (304) les au moins deux parties de premières informations de parking pour le même cadre de parking sur la base des longueurs de chevauchement de projection et des distances de décalage.

**3.** Procédé de détection de place de parking selon la revendication 2, dans lequel la détermination (303) de la longueur de chevauchement de projection entre les informations de place de parking du même type de place de parking comprend:

    déterminer un premier cadre de parking et un deuxième cadre de parking sur la base des informations de parking du même type de parking ;
    déterminer les longueurs des lignes de projection du premier cadre de parking qui sont projetées sur le deuxième cadre de parking et les longueurs des lignes de cadre de parking du deuxième cadre de parking ; et
    déterminer des longueurs de chevauchement des projections sur la base des longueurs des lignes de projection et des longueurs des lignes de cadre de parking.

4. Procédé de détection de place de parking selon la revendication 2, dans lequel la détermination (303) des distances de décalage entre les informations de place de parking du même type de place de parking comprend :

    déterminer un premier cadre de parking et un deuxième cadre de parking sur la base des informations de parking du même type de parking ;
    déterminer un premier point d'angle à partir du premier cadre de parking et déterminer un deuxième point d'angles correspondant au premier point d'angle à partir du deuxième cadre de parking ; et
    déterminer une distance verticale entre le premier point d'angle et une ligne de cadre de parking où se trouve le deuxième point d'angle, en tant que distance de décalage.

5. Dispositif de détection de place de parking, comprenant :

    un module (401) pour obtenir des ensembles d'informations de parking, configuré pour obtenir des ensembles d'informations de parking détectés par au moins deux capteurs pendant le parking ;
    un module d'équilibrage (402) configuré pour effectuer une mise en correspondance d'informations de parking entre les ensembles d'informations de parking collectés par les au moins deux capteurs afin d'obtenir au moins deux parties de premières informations de parking pour un seul et même cadre de parking ; et
    un second module de génération d'informations de parking (403) configuré pour générer des secondes informations de parking sur la base des au moins deux parties des premières informations de parking,

dans lequel le second module (403) pour générer des informations de parking comprend :

    un sous-module de fusion configuré pour effectuer une fusion des au moins deux parties des premières informations de parking afin d'obtenir les secondes informations de parking, dans lequel chacune desdites au moins deux parties de premières informations de parking a une probabilité d'exactitude de perception,
    dans lequel le sous-module de fusion comprend une unité de détermination de probabilité d'exactitude de perception configurée pour déterminer si les au moins deux parties des premières informations de parking ont au moins deux probabilités d'exactitude de perception qui sont supérieures à une probabilité prédéterminée ; et
    une unité pour obtenir des secondes informations de parking configurée pour effectuer une fusion avec des premières informations de parking correspondant aux au moins deux probabilités d'exactitude de perception qui sont supérieures à la probabilité prédéterminée pour obtenir les secondes informations de parking lorsque les au moins deux parties des premières informations de parking ont les au moins deux probabilités d'exactitude de perception qui sont supérieures à la probabilité prédéterminée,

**caractérisé en ce que** chacune desdites au moins deux parties de premières informations de parking comprend en outre des informations de point d'angle, et l'unité comprend pour obtenir des secondes informations de parking :

    une sous-unité d'obtention d'informations de sommet fusionnées configurée pour obtenir des informations de sommet fusionnées en effectuant une fusion des informations de sommet dans les premières informations de parking correspondant aux au moins deux probabilités d'exactitude de perception qui sont supérieures à la probabilité prédéterminée ; et
    une deuxième sous-unité de génération d'informations de parking configurée pour générer les deuxièmes informations de parking sur la base des informations de point d'angle fusionnées.

6. Dispositif de détection de place de parking selon la revendication 5, dans lequel le module d'équilibrage (402) comprend :

    un sous-module de détermination de type de place de parking configuré pour déterminer des types de place de parking à partir d'informations de place de parking dans les ensembles d'informations de place de parking

---

---

**EP 4 033 457 B1**

collectés par les au moins deux capteurs;
un sous-module de détermination des longueurs de chevauchement des projections et des distances de décalage, configuré pour déterminer les longueurs de chevauchement des projections et les distances de décalage entre les informations de parking du même type de parking; et
un sous-module de détermination des premières informations de parking configuré pour déterminer les au moins deux parties des premières informations de parking pour le même cadre de parking sur la base des longueurs de chevauchement de projection et des distances de décalage.

7. Dispositif de détection de place de parking selon la revendication 6, dans lequel le sous-module comprend des moyens pour déterminer la longueur de chevauchement de la projection et la distance de décalage:

une unité de détermination de cadre de parking configurée pour déterminer un premier cadre de parking et un deuxième cadre de parking sur la base des informations de parking du même type de parking;
une unité de détermination de la longueur des lignes de projection et des lignes de cadre de parking, configurée pour déterminer les longueurs des lignes de projection du premier cadre de parking projetées sur le deuxième cadre de parking et les longueurs des lignes de cadre de parking du deuxième cadre de parking; et
une unité de détermination de longueur de chevauchement de projection configurée pour déterminer les longueurs de chevauchement de projection sur la base des longueurs des lignes de projection et des longueurs des lignes de cadre de parking.

8. Véhicule équipé d'un processeur, d'une mémoire et d'un programme d'ordinateur stocké dans la mémoire et pouvant être exécuté par le processeur,
**caractérisé en ce que** le programme informatique, lorsqu'il est exécuté par le processeur, met en oeuvre le procédé de détection de place de parking selon l'une quelconque des revendications 1 à 4.

9. Support de stockage lisible par ordinateur sur lequel est enregistré un programme informatique,
**caractérisé en ce que** le programme informatique, lorsqu'il est exécuté par un processeur, met en oeuvre le procédé de détection de place de parking selon l'une quelconque des revendications 1 à 4.

Obtaining, during parking, parking space information sets collected by at least two sensors | 101

Performing parking space information matching between the parking space information sets collected by the at least two sensors to obtain at least two pieces of first parking space information for a same parking space frame | 102

Generating second parking space information based on the at least two pieces of first parking space information | 103

FIG. 1

Obtaining, during parking, parking space information sets collected by at least two sensors | 201

Performing parking space information matching between the parking space information sets collected by the at least two sensors to obtain at least two pieces of first parking space information for a same parking space frame, each of the at least two pieces of first parking space information including a perception correctness probability | 202

Determining whether the at least two pieces of first parking space information comprise at least two perception correctness probabilities greater than a predetermined probability | 203

Performing fusion on first parking space information corresponding to the at least two perception correctness probabilities greater than the predetermined probability to obtain the second parking space information, when the at least two pieces of first parking space information comprise the at least two perception correctness probabilities greater than the predetermined probability | 204

FIG. 2a

FIG. 2b

| | |
|---|---|
| Obtaining, during parking , parking space information sets collected by at least two sensors | 301 |
| Determining parking space types of parking space information in the parking space information sets collected by the at least two sensors | 302 |
| Determining projection overlap lengths and offset distances between parking space information of a same parking space type | 303 |
| Determining the at least two pieces of first parking space information for the same parking space frame based on the projection overlap lengths and the offset distances | 304 |
| Generating second parking space information based on the at least two pieces of first parking space information | 305 |

FIG. 3a

Parking space a

Parking space b

Parking space c

Road

FIG. 3b

| Parking space information set obtaining module 401 |
|---|
| Matching module 402 |
| Second parking space information generating module 403 |

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111881874 A
- CN 109532821 A

- CN 109435942 A